# EUROPEAN PATENT SPECIFICATION

(11) **EP 3 446 904 B1**
(45) Date of publication and mention of the grant of the patent: **30.12.2020**
(21) Application number: 18185128.8
(22) Date of filing: 24.07.2018
(51) Int. Cl.: B60J 5/04

(54) **VEHICLE DOOR SYSTEM**
FAHRZEUGTÜRSYSTEM
SYSTÈME DE PORTE DE VÉHICULE

(30) Priority: 24.08.2017 GB 201713620
(43) Date of publication of application: 27.02.2019
(73) Proprietor: Ford Global Technologies, LLC, Dearborn, MI 48126 (US)
(72) Inventor: HOGGARTH, Marcus, St. Albans, Hertfordshire AL1 4EP (GB); LECK, Matthew, Ruislip, Middlesex HA4 8NQ (GB); CARROLL, Ben, London, N16 8DL (GB); DE SAULLES, Stephen, London, N1 8LB (GB); ROSE, Edward, London, N4 2XR (GB); WARREN, Morten, Cobham, Surrey KT11 2EU (GB)
(74) Representative: Haseltine Lake Kempner LLP

(56) References cited:
- DE-A1-102013 018 670
- US-A- 1 603 181
- US-A- 1 603 182
- US-A1- 2005 116 496
- US-A1- 2006 152 029
- US-B1- 6 899 374
- Rolls-Royce Motor Cars: "The visionary Rolls-Royce 103EX. Journey into the future of luxury.", Youtube, 16 June 2016 (2016-06-16), page 3 pp., XP054978766, Retrieved from the Internet: URL:https://www.youtube.com/watch?v=dGSm08 2ELXY [retrieved on 2018-10-09]

## Description

This disclosure relates to a vehicle door system, and in particular, but not exclusively, to a vehicle door system having four doors that cooperate to close an opening in a body of a vehicle.

### Introduction

A vehicle, such as a car or a truck, typically has one or more doors that allow access into and out of the vehicle. For example, a vehicle may have front doors to allow an individual to access the front seats of the vehicle, and rear doors to allow an individual to access the rear seats of the vehicle. Such a seating layout is commonplace, and is usually dependent on the configuration of the vehicle's chassis.

With the advent of electric and/or autonomous vehicles, an automotive designer is less restricted in the design of the passenger compartment. As a result, the seating arrangement in a modern vehicle may be different from that of a conventional vehicle. Furthermore, the seating arrangement in a modern vehicle may be reconfigurable depending on a passenger's requirements for a particular journey. It is desirable, therefore, to provide a vehicle door that allows sufficient access into and out of a vehicle irrespective of the seating arrangement of the vehicle.

A vehicle with multi-part doors is disclosed in US 1 603 182 A.

### Statements of Invention

The present disclosure seeks to protect a vehicle door system, a vehicle comprising at least one of the vehicle door systems and a method of accessing a vehicle as defined in the claims.

According to the invention there is provided a vehicle door system having a first door configured to cover a top portion, e.g. only a top portion, of an opening in the body of a vehicle and to open in an upward manner, and a second door configured to cover a bottom portion, e.g. only a bottom portion, of the opening and to open in a sideward manner. The first door may be a top door. The second door may be a bottom door. The first door may be a gullwing door.

The first and second doors may cooperate to fully close the opening in the body of the vehicle. The first door may be rotationally and/or slideably coupled to the body of the vehicle towards or at a top edge of the opening in the body of the vehicle. The second door may be rotationally and/or slideably coupled to the body of the vehicle towards or at a side edge of the opening in the body of the vehicle. The second door may be rotationally and/or slideably coupled to the body of the vehicle at a point remote from a side edge of the opening in the body of the vehicle.

The first door may be configured to translate longitudinally, e.g. vertically when the vehicle is on a level surface, with respect to the opening in the body of the vehicle. The second door may be configured to translate laterally, e.g. horizontally when the vehicle is on a level surface, with respect to the opening in the body of the vehicle. The second door may be slidably coupled to the body of the vehicle.

A bottom edge of the first door and a top edge of the second door may be configured to engage each other when the first and second doors are in a closed position. For example, the bottom edge of the first door and the top edge of the second door may be shaped so as to conform to each other when the first and second doors are in a closed position. The first and second doors may be brought into sealable engagement when the first and second doors are in a closed position. The first door comprises a first portion and a second portion. The first portion and the second portion may be moveably, e.g. rotationally and/or slideably, coupled. The first portion and the second portion are configured to fold with respect to each other. The first door may comprise a biasing element configured to bias the first portion away from the second portion. The biasing element may be configured to support at least part of the weight of the second portion, e.g. when the first door is in an at least partially open position. For example, where the first and second portions are pivotably connected, the biasing element may be configured to support the second portion relative to the first portion such that the second portion extends away from the first portion in a substantially horizontal plane.

The first door may be configured to form a canopy over the opening when the first door is at least partially open. The canopy may be configured to extend away from the body of the vehicle. The canopy may be configured to provide cover/shelter for an individual standing next to or near to the opening in the body of the vehicle. The canopy may extend away from the body of the vehicle by an amount in the range of approximately 0.3m to 1.2m. The first door comprises a deployable portion configured to deploy from the second portion of the first door. The deployable portion is configured to form at least a portion of the canopy. The deployable portion may be configured to alter the amount by which the canopy extends away from the body of the vehicle.

The vehicle door system may comprise another door, e.g. a third door. The third door may be another top door. The third door may be configured to cooperate with the first door to cover the top portion of the opening in the body of the vehicle. The third door may be configured to open in an upward manner.

The vehicle may comprise another door, e.g. a fourth door. The fourth door may be another bottom door. The fourth door may be configured to cooperate with the second door to cover the bottom portion of the opening in the body of the vehicle. The fourth door may be configured to open in a sideward manner.

The third door may be provided without the fourth door, and the fourth door may be provided without the third door. The vehicle door system may comprise any appropriate number of doors in addition to the first and second doors.

The vehicle door system may comprise a step that is configured to deploy, e.g. from the body of the vehicle and/or the second door, proximate to a lower edge of the opening in the body of the vehicle.

According to another aspect of the present disclosure there is provided a method of accessing a vehicle, the vehicle having a first door configured to cover a top portion of an opening in the body of the vehicle, and a second door configured to cover a bottom portion of the opening, the method comprising: opening the first door in an upward manner, and opening the second door in a sideward manner to allow a user to access the vehicle.

A vehicle may be provided comprising one or more of the above mentioned vehicle door systems.

To avoid unnecessary duplication of effort and repetition of text in the specification, certain features are described in relation to only one or several aspects or arrangements of the disclosure. However, it is to be understood that, where it is technically possible, features described in relation to any aspect or arrangement of the disclosure may also be used with any other aspect or arrangement of the disclosure.

### Brief Description of the Drawings

For a better understanding of the present disclosure, and to show more clearly how it may be carried into effect, reference will now be made, by way of example, to the accompanying drawings, in which:
Figure 1a shows a vehicle body having a plurality of doors in a fully closed position;
Figure 1b shows a vehicle body having a plurality of doors in a partially open position;
Figure 1c shows a vehicle body having a plurality of doors in a fully open position; and
Figure 2 shows a vehicle body having a door in an open position.

### Detailed Description

The present disclosure provides a vehicle door system configured to close an opening in a body of a vehicle. The vehicle may be any type of vehicle, such a car, a van, a truck, a marine vessel or an aircraft. In particular, the vehicle may be a vehicle having a passenger compartment with a reconfigurable seating arrangement, for example a seating arrangement having one or more vehicle seats that can be moved around the passenger compartment.

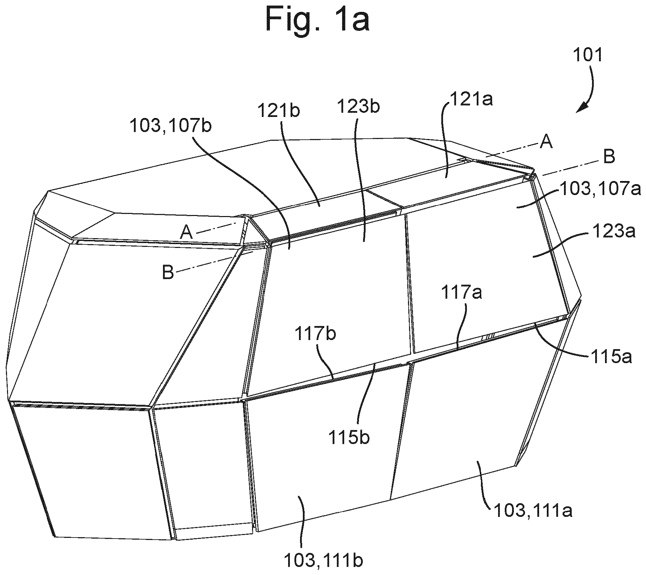

Figures 1a to 1c show a vehicle body, for example a passenger compartment 101 of a vehicle. Although not shown in the figures, it is understood that the passenger compartment 101 may be mounted on, and/or form a part of, a chassis of the vehicle. It is also understood that the passenger compartment 101 shown in the figures may be of any appropriate size and shape depending on the configuration of the vehicle, and that the size and shape of the passenger compartment 101 is not limited to that show in the figures. Indeed, the depicted passenger compartment 101 is shown in a simplified state for the sake of describing the claimed invention.

The passenger compartment 101 has a plurality of doors 103 configured to close, e.g. sealably close, an opening 105 in the passenger compartment 101. In the arrangement shown in figures 1a to 1c, the passenger compartment 101 has four doors 103 that cooperate to close the opening 105. For example, the passenger compartment 101 has two top doors 107a, 107b that are configured to cooperate to cover a top portion 109 of the opening 105 of the passenger compartment 101, and two bottom doors 111a, 111b that are configured to cooperate to cover a bottom portion 113 of the opening 105 of the passenger compartment 101. The top doors 107a, 107b and the bottom doors 111a, 111b cooperate to fully close the opening 105 when the doors 107a, 107b, 111a, 111b are in a closed position. However, the passenger compartment 101 may have a door system having any appropriate number of top doors and bottoms doors. For example, the passenger compartment 101 may have at least one top door and at least one bottom door that cooperate to fully close the opening 105 in the body of the vehicle.

In the arrangement shown in figures 1a to 1c, each of the top doors 107a, 107b is configured to cover half of the top portion 109 of the opening 105, and each of the bottom doors 111a, 111b is configured to cover half of the bottom portion 113 of the opening 105. In this manner, each of the doors 107a, 107b, 111a, 111b cover approximately one quarter of the opening 105 in the passenger compartment 101. However, the doors 107a, 107b, 111a, 111b may be configured to cover any appropriate amount of the opening 105. For example, the top and bottom portions 109, 113 of the opening 105 may be of different overall sizes, such that the total size of the opening 105 is not divided equally between the top and bottom portions 109. In one arrangement, the top portion 109 may make up about 25% of the total size of the opening 105, the bottom portion 113 making up the rest, or vice versa.

In the arrangement shown in figures 1a to 1c, the top doors 107a, 107b are configured to open in an upward manner e.g. in a direction towards and away from a top edge of the opening 105. For example, each of the top doors 107a, 107b may be coupled to the body of the vehicle so that they may be opened and closed in a substantially vertical manner. The top doors 107a, 107b may be moveably, e.g. slidably and/or rotationally, coupled to the vehicle body to allow the top doors 107a, 107b to open to uncover the top portion 107 of the opening 105. In the arrangement shown in figures 1a to 1c, the top doors 107a, 107b are coupled together, e.g. at respective lateral edges, so that the top doors 107a, 107b open and close at the same time. In another arrangement (not shown), the top doors 107a, 107b may be able to move independently, so as to allow each of the top doors 107a, 107b to open by a different amount. For example, the door system may comprise a releasable securing mechanism configured to secure the top doors 107a, 107b together. The releasable securing mechanism may be actuated to selectively secure and unsecure the top doors 107a, 107b to and from each other. This has the advantage of the door system having a plurality of operational states. For example, an individual may select a door configuration in which both of the top doors 107a, 107b, or only one of the top doors 107a, 107b are open, depending on the requirements of the individual.

In the arrangement shown in figures 1a to 1c, the bottom doors 111a, 111b are configured to open in a sideways manner, e.g. in a lateral direction towards a side edge of the opening 105. For example, each of the bottom doors 111a, 111b may be coupled to the body of the vehicle so that they may be opened and closed in a substantially horizontal manner. The bottom doors 111a, 111b may be moveably, e.g. slidably and/or rotationally, coupled to the vehicle body to allow the bottom doors 111a, 111b to open to uncover the bottom portion 109 of the opening 105. In the arrangement shown in figures 1a to 1c, the bottom doors 111a, 111b are configured to move away from each other towards opposite sides of the opening 105 in the vehicle body.

The bottom doors 111a, 111b may be configured to move at the same time. For example, the bottom doors 111a, 111b may be operatively coupled, e.g. by a geared mechanism, so that actuation of one of the bottom doors 111a, 111b effects the movement of the other of the bottom doors 111a, 111b. Alternatively, each of the bottom doors 111a, 111b may be configured to move independently from each other. For example, each of the bottom doors 111a, 111b may be actuated separately from each other, so as to allow access to only a part of the bottom portion 113 of the opening 105. This has the advantage of the door system having a plurality of operational states. For example, an individual may select a door configuration in which only one of the bottom doors 111a, 111b are open, depending on the requirements of the individual.

In the arrangement shown in figures 1a to 1c, the bottom edges 115a, 115b of the top doors 107a, 107b are configured to engage the top edges 117a, 117b of the bottom doors 111a, 111. In particular, the bottom edge 115a of the top door 107a is configured to engage the top edge 117a of the bottom door 111a. Similarly, the bottom edge 115b of the top door 107b is configured to engage the top edge 117b of the bottom door 111b. In the arrangement shown in figures 1a to 1c, the bottom edges 115a, 115b of the top doors 107a, 107b and the top edges 117a, 117b of the bottom doors 111a, 111b are straight edges. However, the edges 115a, 115b, 117a, 117b of the doors 107a, 107b, 111a, 111b may be of any appropriate size and shape to ensure that the top doors 107a, 107b engage, e.g. fully engage, the bottom doors 111a, 111b when in a closed state.

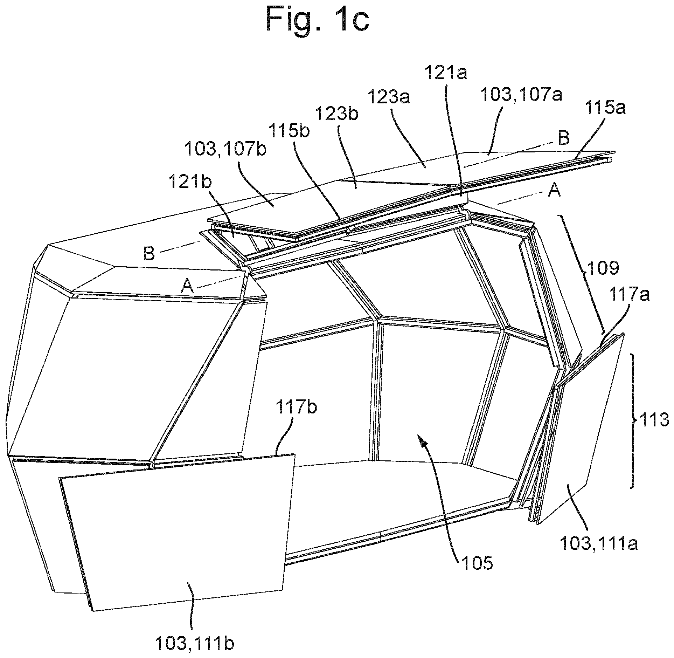

One advantage of the door system shown in figures 1a to 1c is that the doors 107a, 107b, 111a, 111b may be moved into a variety of positions to account for the requirements of the individual using the vehicle. For example, where all of the doors 107a, 107b, 111a, 111b are in a fully open position, as shown in figure 1c, access into and out of the passenger compartment 101 is unhindered, allowing an individual to move into the passenger compartment 101 using any portion of the opening 105. This is especially advantageous where the vehicle comprises a seating arrangement that may be reconfigured. For example, the vehicle may comprise a plurality of movable seat that may not necessarily be in the same position within the passenger compartment 101 whenever an individual uses the vehicle. As such, since the door system allows for unhindered access across the extent of the opening 105, the individual is able to access any portion of the opening 105 that is otherwise not obstructed by a vehicle seat. For example, if a vehicle seat is positioned to the right hand side of the opening 105, the individual may enter the passenger compartment 101 to the left hand side of the opening 105, and vice versa.

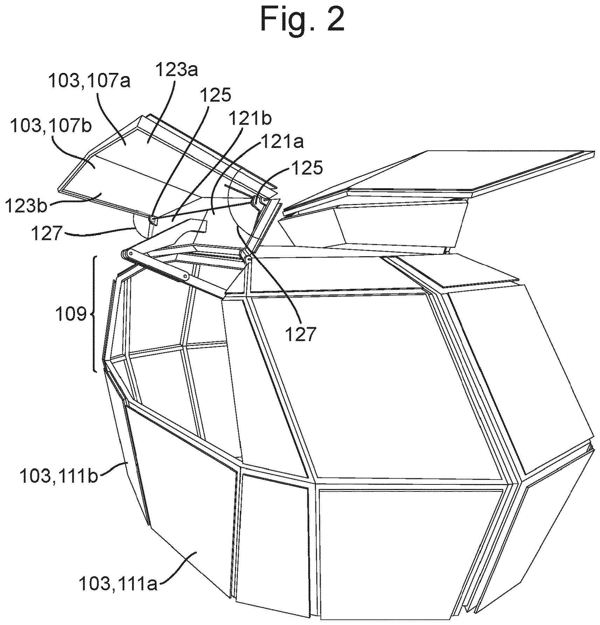

In some scenarios, the individuals occupying the passenger compartment 101 may wish to park their vehicle close to an event, such as a concert or a sports match, and watch the event whilst sitting in the vehicle. In such a case, the doors 107a, 107b, 111a, 111b may be arranged so that the bottom doors 111a, 111b are closed, so as to provide some privacy, and so that the top doors 107a, 107b are open, so as to allow the individuals to view the event, as shown in figure 2 for example. In another arrangement (not shown), an individual may wish to open only one of the top doors 107a, 107b and/or only one of the bottom doors 111a, 111b.

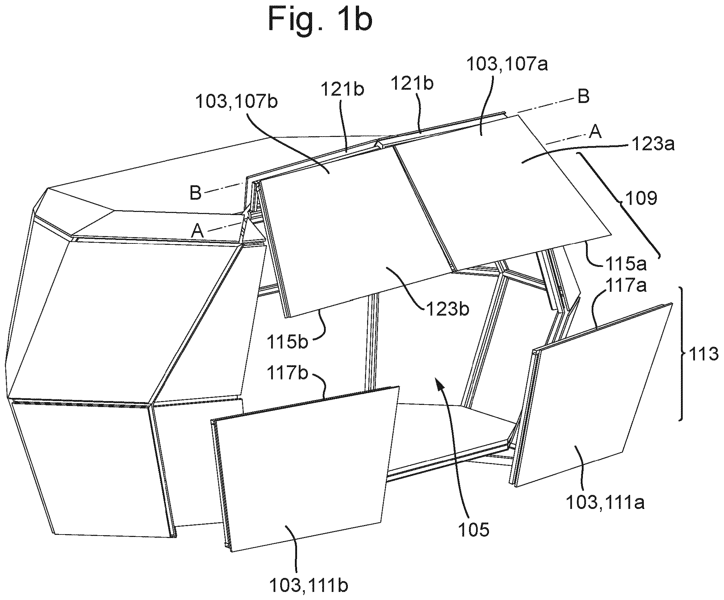

In the arrangement shown in figures 1a to 2, the top doors 107a, 107b each comprise a first portion 121a, 121b and a second portion 123a, 123b that are movably coupled to each other. For example, the first portion 121a, 121b and second portion 123a, 123b may be connected by virtue of a hinge, which allows the first portion 121a, 121b and second portion 123a, 123b to fold relative to each other. One advantage of this feature is that the clearance between the vehicle body and another article, such as another vehicle or a wall, is less than that required if the top doors 107a, 107b were to be formed from a single door portion. For example, figures 1a to 1c depict the doors 107a, 107b, 111a, 111b in a closed state, a partially open state, and a fully open state respectively. Seen most clearly from figure 1b, the first portions of 121a, 121b of the top doors 107a, 107b pivot about a first axis AA, the second portions of 123a, 123b of the top doors 107a, 107b pivot about a second axis BB. In this manner, the second portions 123a, 123b of the top doors 107a, 107b hang down from axis BB as the top doors 107a, 107b open. Importantly, this allows the second portions of 123a, 123b of the top doors 107a, 107b to stay close to the body of the vehicle as the top doors 107a, 107b open, which reduces the clearance needed, e.g. to the side of the vehicle, to open the top doors 107a, 107b.

Figure 2 shows further detail of the coupling between the first portion 121a, 121b and second portion 123a, 123b. For example, the top doors 107a, 107b may comprise a biasing element 125, such as a spring or gas strut, configured to bias the first portion 121a, 121b away from the second portion 123a, 123b. In the arrangement shown in figure 2, the biasing element 125 is configured to support the weight of the second portion 123a, 123b, when the first portion 121a, 121b is inclined towards the roof of the passenger compartment 101. In this manner, the first portion 121a, 121b and second portion 123a, 123b are biased so as to maintain an angular clearance 127 between the first portion 121a, 121b and the second portion 123a, 123b. In one arrangement, the spring rate of the biasing element 125 may be selected to define by how much the second portion 123a, 123b is inclined towards the roof of the passenger compartment 101, for example when the top door 107a, 107b is in a fully open position. Additionally or alternatively, the top doors 107a, 107b may comprise an actuator configured to move, e.g. rotate and/or translate, the first portion 121a, 121b relative to the second portion 123a, 123b. For example, the hinged coupling between the first portion 121a, 121b and the second portion 123a, 123b may be driven so as to control the angle 127 between the first portion 121a, 121b and the second portion 123a, 123b. In one arrangement, the coupling between the first portion 121a, 121b and the second portion 123a, 123b may be operatively connected to the coupling between the first portion 121a, 121b and the body of the vehicle, so that the actuation of the first portion 121a, 121b relative to the body of the vehicle effects the movement of the second portion 123a, 123b relative to the first portion 121a, 121b.

Irrespective of whether the top doors 107a, 107b comprise a single portion, or multiple portions such as that shown in the figures, the top doors 107a, 107b are configured to extend away from the body of the vehicle when the top doors 107a, 107b are in an at least partially open state. In particular, the top doors 107a, 107b are configured to form a canopy over the entrance to the passenger compartment 101, when the top doors 107a, 107b are open. For example, when the top doors 107a, 107b are in a fully open position, the top doors 107a, 107b may extend away from body of the vehicle, for example away from a top edge of the opening 105, by an amount sufficient to provide cover or shelter for an individual standing next to the opening 105 in the passenger compartment 101. In this manner, an individual may be sheltered from rain as he or she enters or exits the passenger compartment 101. This is particularly advantageous, as it allows the individual to remain dry whilst removing an item of clothing before entering the passenger compartment 101.

It will be appreciated by those skilled in the art that although the disclosure has been described by way of example with reference to one or more arrangements, it is not limited to the disclosed arrangements and that alternative arrangements could be constructed without departing from the scope of the disclosure as defined by the appended claims.

## Claims

1. A vehicle door system having a first door (107a, 107b) configured to cover a top portion of an opening (105) in the body of a vehicle and to open in an upward manner, and a second door (111a, 111b) configured to cover a bottom portion of the opening (105) and to open in a sideward manner, the first door (107a, 107b) comprising a deployable portion configured to form at least a portion of a canopy extending away from the body of the vehicle when the first door (107a, 107b) is at least partially open, **characterized in that** the first door (107a, 107b) comprises a
first portion (121a, 121b) and a second portion (123a, 123b), the first portion (121a, 121b) and the second portion (123a, 123b) being configured to fold with respect to each other.

2. A vehicle door system according to claim 1, wherein the first (107a, 107b) and second (111a, 111b) doors cooperate to fully close the opening (105) in the body of the vehicle.

3. A vehicle door system according to claim 1 or 2, wherein the second door (111a, 111b) is rotationally coupled to the body of the vehicle at a point remote from a side edge of the opening (105) in the body of the vehicle.

4. A vehicle door system according to any of the preceding claims, wherein the second door (111a, 111b) is configured to translate laterally with respect to the opening (105) in the body of the vehicle.

5. A vehicle door system according to any of the preceding claims, wherein the second door (111a, 111b) is slidably coupled to the body of the vehicle.

6. A vehicle door system according to any of the preceding claims, wherein the first door (107a, 107b) comprises a biasing element (125) configured to bias the first portion (121a, 121b) away from the second portion (123a, 123b).

7. A vehicle door system according to any of the preceding claims, wherein the first portion (121a, 121b) and the second portion (123a, 123b) of the first door (107a, 107b) are rotationally coupled.

8. A vehicle door system according to any of the preceding claims, wherein the canopy is configured to extend away from the body of the vehicle so as to cover an individual when standing next to the opening in the body of the vehicle.

9. A vehicle door system according to any of the preceding claims, wherein the first door (107a, 107b) is a gullwing door.

10. A vehicle door system according to any of claims 1 and 3 to 9 when not dependent on claim 2, wherein the vehicle door system comprises another door cooperating with the first door to cover the top portion of the opening in the body of the vehicle, and being configured to open in an upward manner.

11. A vehicle door system according to any of claims 1 and 3 to 10 when not dependent on claim 2, wherein the vehicle door system comprises another door cooperating with the second door to cover the bottom portion of the opening in the body of the vehicle, and being configured to open in a sideward manner.

12. A vehicle door system according to any of the preceding claims, the vehicle door system comprising a step that is configured to deploy from the body of the vehicle proximate to a lower edge of the opening in the body of the vehicle.

13. A vehicle comprising at least one of the vehicle door systems according to any of claims 1 to 12.

14. A method of accessing a vehicle, the vehicle having a first door (107a, 107b) configured to cover a top portion of an opening (105) in the body of the vehicle, and a second door (111a, 111b) configured to cover a bottom portion of the opening (105), the first door (107a, 107b) comprising a deployable portion configured to form at least a portion of a canopy extending away from the body of the vehicle when the first door (107a, 107b) is at least partially open, the method comprising:
opening the first door (107a, 107b) in an upward manner, and opening the second door (111a, 111b) in a sideward manner to allow a user to access the vehicle; and
deploying the deployable portion to form at least a portion of a canopy extending away from the body of the vehicle when the first door (107a, 107b) is at least partially open, and wherein the first door (107a, 107b) comprises a first portion (121a, 121b) and a second portion (123a, 123b), the first portion (121a, 121b) and the second portion (123a, 123b) being configured to fold with respect to each other.

## Patentansprüche

1. Fahrzeugtürsystem, das eine erste Tür (107a, 107b), die konfiguriert ist, um einen oberen Abschnitt einer Öffnung (105) in der Karosserie eines Fahrzeugs abzudecken und um auf eine aufwärtige Weise zu öffnen, und eine zweite Tür (111a, 111b), die konfiguriert ist, um einen unteren Abschnitt der Öffnung (105) abzudecken und auf eine seitwärtige Weise zu öffnen, aufweist, die erste Tür (107a), 107b) umfassend einen klappbaren Abschnitt, der konfiguriert ist, um mindestens einen Abschnitt eines Vordachs zu bilden, das sich weg von der Karosserie des Fahrzeugs erstreckt, wenn die erste Tür (107a, 107b) mindestens teilweise geöffnet ist, **dadurch gekennzeichnet, dass** die erste Tür (107a, 107b) einen ersten Abschnitt (121a, 121b) und einen zweiten Abschnitt (123a, 123b) umfasst, wobei der erste Abschnitt (121a, 121b) und der zweite Abschnitt (123a, 123b) so konfiguriert sind, um in Bezug aufeinander gefaltet zu werden.

2. Fahrzeugtürsystem gemäß Anspruch 1, wobei die erste (107a, 107b) und die zweite (111a, 111b) Tür zusammenwirken, um die Öffnung (105) in der Karosserie des Fahrzeugs vollständig zu schließen.

3. Fahrzeugtürsystem gemäß Anspruch 1 oder 2, wobei die zweite Tür (111a, 111b) an einem Punkt, der von einer Seitenkante der Öffnung (105) in der Karosserie des Fahrzeugs entfernt ist, drehbar mit der Karosserie des Fahrzeugs gekoppelt ist.

4. Fahrzeugtürsystem gemäß einem der vorherigen Ansprüche, wobei die zweite Tür (111a, 111b) konfiguriert ist, um seitlich in Bezug auf die Öffnung (105) in der Karosserie des Fahrzeugs verschoben zu werden.

5. Fahrzeugtürsystem gemäß einem der vorherigen Ansprüche, wobei die zweite Tür (111a, 111b) gleitfähig mit der Karosserie des Fahrzeugs verbunden ist.

6. Fahrzeugtürsystem gemäß einem der vorherigen Ansprüche, wobei die erste Tür (107a, 107b) ein Vorspannelement (125) umfasst, das konfiguriert ist, um den ersten Abschnitt (121a, 121b) weg von dem zweiten Abschnitt (123a, 123b) vorzuspannen.

7. Fahrzeugtürsystem gemäß einem der vorherigen Ansprüche, wobei der erste Abschnitt (121a, 121b) und der zweite Abschnitt (123a, 123b) der ersten Tür (107a, 107b) drehend gekoppelt sind.

8. Fahrzeugtürsystem gemäß einem der vorherigen Ansprüche, wobei das Vordach konfiguriert ist, um sich weg von der Karosserie des Fahrzeugs zu erstrecken, um eine Person zu bedecken, wenn sie neben der Öffnung in der Karosserie des Fahrzeugs steht.

9. Fahrzeugtürsystem gemäß einem der vorherigen Ansprüche, wobei die erste Tür (107a, 107b) eine Flügeltür ist.

10. Fahrzeugtürsystem gemäß einem der Ansprüche 1 und 3 bis 9 wenn nicht abhängig von Anspruch 2, wobei das Fahrzeugtürsystem eine weitere Tür umfasst, die mit der ersten Tür zusammenwirkt, um den oberen Abschnitt der Öffnung in der Karosserie des Fahrzeugs abzudecken, und konfiguriert ist, um auf eine aufwärtige Weise zu öffnen.

11. Fahrzeugtürsystem gemäß einem der Ansprüche 1 und 3 bis 10 wenn nicht abhängig von Anspruch 2, wobei das Fahrzeugtürsystem eine weitere Tür umfasst, die mit der zweiten Tür zusammenwirkt, um den unteren Abschnitt der Öffnung in der Karosserie des Fahrzeugs abzudecken, und konfiguriert ist, um auf eine seitwärtige Weise zu öffnen.

12. Fahrzeugtürsystem gemäß einem der vorherigen Ansprüche, das Fahrzeugtürsystem umfassend eine Stufe, die konfiguriert ist, um von der Karosserie des Fahrzeugs in der Nähe einer unteren Kante der Öffnung in der Karosserie des Fahrzeugs geklappt zu werden.

13. Fahrzeug, umfassend mindestens eines der Fahrzeugtürsysteme gemäß einem der Ansprüche 1 bis 12.

14. Verfahren für einen Zugang zu einem Fahrzeug, wobei das Fahrzeug eine erste Tür (107a, 107b) aufweist, die konfiguriert ist, um einen oberen Abschnitt einer Öffnung (105) in der Karosserie des Fahrzeugs abzudecken, und eine zweite Tür (111a, 111b), die konfiguriert ist, um einen unteren Abschnitt der Öffnung (105) abzudecken, aufweist, die erste Tür (107a, 107b) umfassend einen klappbaren Abschnitt, der konfiguriert ist, um mindestens einen Abschnitt eines Vordachs zu bilden, das sich weg von der Karosserie des Fahrzeugs erstreckt, wenn die erste Tür (107a, 107b) mindestens teilweise geöffnet ist, das Verfahren umfassend:
Öffnen der ersten Tür (107a, 107b) auf eine aufwärtige Weise und Öffnen der zweiten Tür (111a, 111b) auf eine seitwärtige Weise, um einem Benutzer einen Zugang zu dem Fahrzeug zu ermöglichen; und
Klappen des klappbaren Abschnitts, um wenigstens einen Abschnitt eines Vordachs zu bilden, das sich weg von der Karosserie des Fahrzeugs erstreckt, wenn die erste Tür (107a, 107b) wenigstens teilweise geöffnet ist, und wobei die erste Tür (107a, 107b) einen ersten Abschnitt (121a, 121b) und einen zweiten Abschnitt (123a, 123b) umfasst, wobei der erste Abschnitt (121a, 121b) und der zweite Abschnitt (123a, 123b) konfiguriert sind, um in Bezug aufeinander gefaltet zu werden.

## Revendications

1. Un système de portière de véhicule ayant une première portière (107a, 107b) configurée pour recouvrir une partie supérieure d'une ouverture (105) dans la carrosserie d'un véhicule et pour s'ouvrir vers le haut, et une deuxième portière (111a, 111b) configurée pour recouvrir une partie inférieure de l'ouverture (105) et pour s'ouvrir sur le côté, la première portière (107a, 107b) comprenant une partie déployable configurée pour former au moins une partie d'un toit amovible s'étendant à l'écart de la carrosserie du véhicule lorsque la première portière (107a, 107b) est au moins partiellement ouverte, **caractérisé en ce que** la première portière (107a, 107b) comprend une première partie (121a, 121b) et une deuxième partie (123a, 123b), la première partie (121a, 121b) et la deuxième partie (123a, 123b) étant configurées pour se replier l'une par rapport à l'autre.

2. Un système de portière de véhicule selon la revendication 1, dans lequel les première (107a, 107b) et deuxième (111a, 111b) portières coopèrent pour fermer complètement l'ouverture (105) dans la carrosserie du véhicule.

3. Un système de portière de véhicule selon la revendication 1 ou 2, dans lequel la deuxième portière (111a, 111b) est couplée de manière rotative à la carrosserie du véhicule en un point éloigné d'un bord latéral de l'ouverture (105) dans la carrosserie du véhicule.

4. Un système de portière de véhicule selon l'une quelconque des revendications précédentes, dans lequel la deuxième portière (111a, 111b) est configurée pour se translater latéralement par rapport à l'ouverture (105) dans la carrosserie du véhicule.

5. Un système de portière de véhicule selon l'une quelconque des revendications précédentes, dans lequel la deuxième portière (111a, 111b) est couplée de manière coulissante à la carrosserie du véhicule.

6. Un système de portière de véhicule selon l'une quelconque des revendications précédentes, dans lequel la première portière (107a, 107b) comprend un élément de sollicitation (125) configuré pour solliciter la première partie (121a, 121b) à l'écart de la deuxième partie (123a, 123b).

7. Un système de portière de véhicule selon l'une quelconque des revendications précédentes, dans lequel la première partie (121a, 121b) et la deuxième partie (123a, 123b) de la première portière (107a, 107b) sont couplées de manière rotative.

8. Un système de portière de véhicule selon l'une quelconque des revendications précédentes, dans lequel le toit amovible est configuré pour s'étendre à l'écart de la carrosserie du véhicule de manière à recouvrir un individu lorsqu'il se tient debout à côté de l'ouverture dans la carrosserie du véhicule.

9. Un système de portière de véhicule selon l'une quelconque des revendications précédentes, dans lequel la première portière (107a, 107b) est une portière papillon.

10. Un système de portière de véhicule selon l'une quelconque des revendications 1 et 3 à 9 lorsqu'il ne dépend pas de la revendication 2, dans lequel le système de portière du véhicule comprend une autre portière coopérant avec la première portière pour recouvrir la partie supérieure de l'ouverture dans la carrosserie du véhicule, et étant configurée pour s'ouvrir vers le haut.

11. Un système de portière de véhicule selon l'une quelconque des revendications 1 et 3 à 10 lorsqu'il ne dépend pas de la revendication 2, dans lequel le système de portière du véhicule comprend une autre portière coopérant avec la deuxième portière pour recouvrir la partie inférieure de l'ouverture dans la carrosserie du véhicule, et étant configurée pour s'ouvrir sur le côté.

12. Un système de portière de véhicule selon l'une quelconque des revendications précédentes, le système de portière de véhicule comprenant une marche qui est configurée pour se déployer à partir de la carrosserie du véhicule à proximité d'un bord inférieur de l'ouverture dans la carrosserie du véhicule.

13. Un véhicule comprenant au moins un des systèmes de portière de véhicule selon l'une quelconque des revendications 1 à 12.

14. Un procédé d'accès à un véhicule, le véhicule ayant une première portière (107a, 107b) configurée pour recouvrir une partie supérieure d'une ouverture (105) dans la carrosserie du véhicule, et une deuxième portière (111a, 111b) configurée pour recouvrir une partie inférieure de l'ouverture (105), la première portière (107a, 107b) comprenant une partie déployable configurée pour former au moins une partie d'un toit amovible s'étendant à l'écart de la carrosserie du véhicule lorsque la première portière (107a, 107b) est au moins partiellement ouverte, le procédé comprenant :
l'ouverture de la première portière (107a, 107b) vers le haut, et l'ouverture de la deuxième portière (111a, 111b) sur le côté pour permettre à un utilisateur d'accéder au véhicule ; et
le déploiement de la partie déployable pour former au moins une partie d'un toit amovible s'étendant à l'écart de la carrosserie du véhicule lorsque la première portière (107a, 107b) est au moins partiellement ouverte, et dans lequel la première portière (107a, 107b) comprend une première partie (121a, 121b) et une deuxième partie (123a, 123b), la première partie (121a, 121b) et la deuxième partie (123a, 123b) étant configurées pour se replier l'une par rapport à l'autre.
